# EUROPÄISCHE PATENTANMELDUNG

(11) **EP 0 679 006 A2**
(43) Veröffentlichungstag der Anmeldung: **25.10.1995**
(21) Anmeldenummer: 95106097.9
(22) Anmeldetag: 24.04.1995
(51) Int. Cl.: H04M 11/06, H04Q 11/04

(54) **Verfahren und Anordnung zur Bearbeitung von Signalen in Telekommunikationsendgeräten**

(30) Priorität: 22.04.1994 DE 4414554; 22.04.1994 DE 4414557
(71) Anmelder: SIEMENS AKTIENGESELLSCHAFT, D-80333 München (DE)
(72) Erfinder: Gradl, Dieter, D-90537 Feucht (DE)

(57) **Zusammenfassung**

Die Erfindung betrifft eine Telekommunikationsendeinrichtung mit einem Prozessorsystem (CPU) zur Steuerung des Signalisierungs- und Kommunikationsdatenverkehrs, und
mit Schnittstellen zu Peripherieeinrichtungen und zu Kommunikationsnetzen, wobei an den letzteren kommunikationsnetzspezifische Anschlußeinrichtungen (AA, IA) angeschaltet sind, bei dem ein digitaler Datenbearbeitungsbaustein (DSP) und eine Analog-Digital- bzw. Digital-Analog-Wandlereinrichtung (WE) zur Verbindung der analogen und der digitalen Schnittstellen vorgesehen sind, und
bei dem der Datenbearbeitungsbaustein (DSP) zur Signalverarbeitung der Signalisierungs- und Kommunikationsdaten mit dem Prozessorsystem (CPU) in Verbindung steht.

## Beschreibung

Bei bekannten Geraten zur Verarbeitung von Telekommunikationssignalen werden zur Signalverarbeitung in der Regel Prozessorsysteme (CPU-Systeme) eingesetzt, die die daran angeschlossenen Komponenten steuern. Die Signalverarbeitung und Signalveränderung wird in der Regel analog durchgeführt.

Das Bedürfnis nach Informationsaustausch im Bereich Business auf Geschaftsreisen insbesondere mittels tragbarer Text- und Datenverarbeitungssystemen ist gestiegen. Hieraus ergibt sich der Wunsch, diese Geräte über öffentliche Endgeräte und Netze mit einem Hintergrundsystem zu verbinden. Dies bedingt eine Erweiterung der öffentlichen Kartentelefon-Systeme in Richtung einer Datenkommunikationsmöglichkeit.

Nachteilig wirkt sich bei den bekannten Geräten aus, daß Zusatzfunktionen, wie z.B. Ruftonerkennung, Erzeugung von Signalen, Datenfernübertragung DFÜ für die Datenkommunikation oder Faxanbindung mit zusätzlichen Komponenten (Hardware und Software) realisiert werden muß.

Der Erfindung liegt die Aufgabe zugrunde, bei einem Kommunikationsendgerät der eingangs genannten Art die interne Signalverarbeitung derart durchzuführen, so daß unter anderem die oben aufgeführten Zusatzfinktionen ohne zusätzliche Komponenten ausgeführt werden können.

Diese Aufgabe wird erfindungsgemäß durch die im Patentanspruch 1 angegebenen Merkmale gelöst.

Die erfindungsgemäße Lösung wird vorzugsweise mit einem programmierbaren, digitalen Signalprozessor als Herzstück der Signalalverarbeitung realisiert.

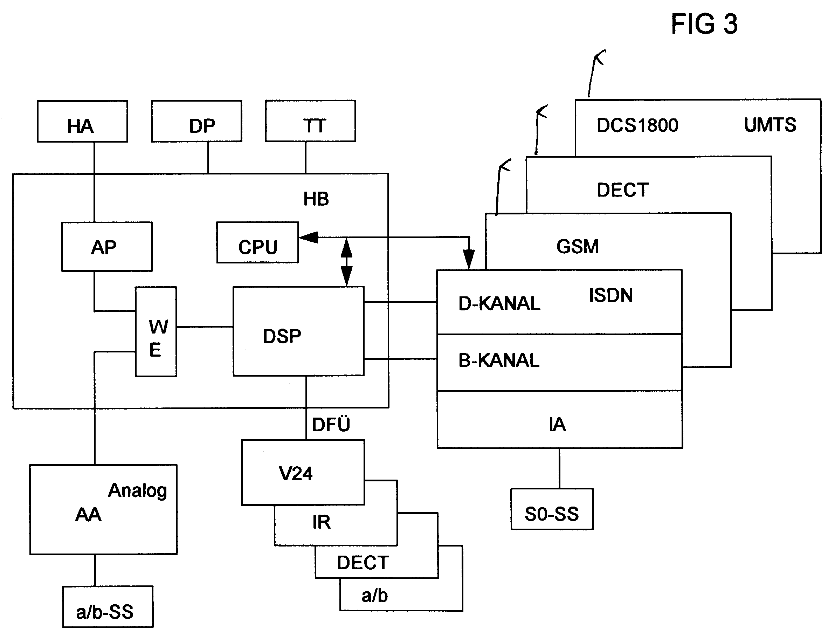

Die erfindungsgemäße Lösung (gemäß Fig. 3) eignet sich für folgende Einsatzfälle:

Analoge und digitale Telekommunikationsendgeräte mit Komfortfunktionen wie Sprachausgabe, DFÜ-Anschaltung, Faxübertragung etc.

Telekommunikationsendgeräte mit einer transparenten Schnittstelle zu Host-Systemen.

Übertragung von Text und Daten über digitale (ISDN) und analoge (Modem, Fax) Übertragungnsverfahren,
gleiche Datenübertragung über analoge Netze,
protokolltransparente Übertragung, dadurch ist der Einsatz von Standardkommunikationssoftware auf dem externen Gerät möglich.

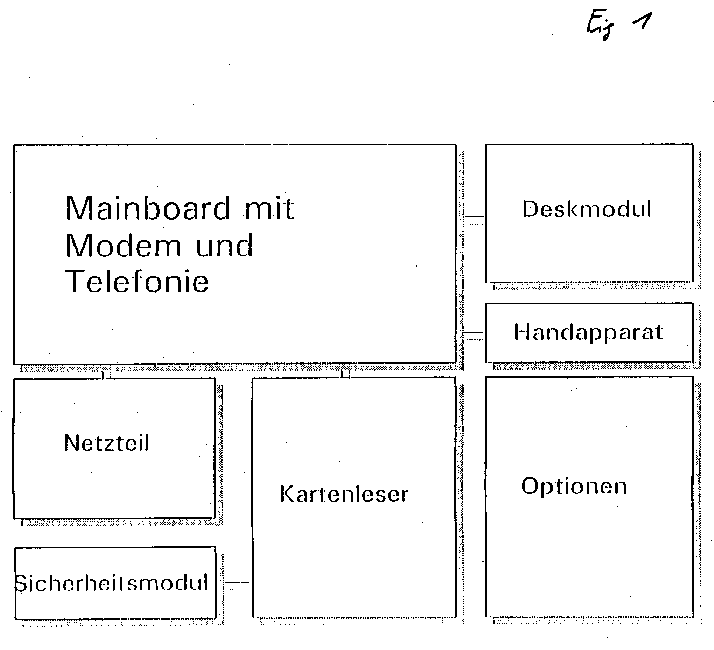

Endgeräte mit vielfältigen Funktionen für das Telekommunikationsnetz sind in großen Stückzahlen auf dem Markt. Die analogen Endgeräten weisen dabei eine analoge Signallaufbereitung (vielfach mit diskreter Technik) auf. Ein verbreitetes Modulkonzept ist in Fig. 1 dargestellt.

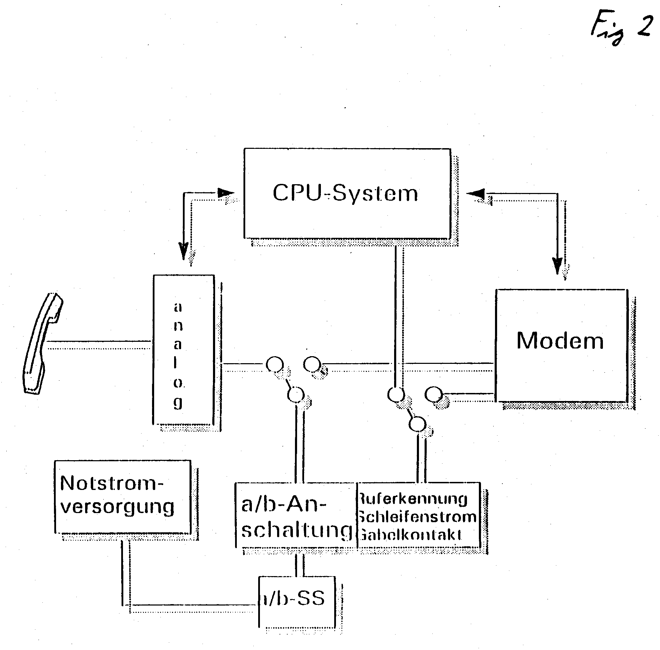

Bei digitalen Endgeräten (z.B. ISDN) ist in der Regel ein digitales Signal in der Form erforderlich, daß direkt eine Schnittstelle angesteuert werden kann. Die Bereitstellung der Signale erfolgt von den jeweiligen Endgeräten. Sobald mehrere Signale miteinander verknüpft werden müsssen, wie beispielsweise Sprache, Fax, Daten etc, steigt der technische Aufwand. In Fig 2 ist eine solche Verbindung als analoger Kommunikationspfad dargestellt.

Geräte, die sowohl an Ahalogschnittstellen als auch an Digitalschnittstellen (z.B. ISDN) angeschlossen werden können, sind derzeit nicht bekannt.

Sofern an ein Sprachendgerät weitere Endgeräte angeschaltet werden sollen, so sind derzeitige zwei komplette Kommunikationspfade erforderlich , die erst direkt an der Kommunikationsschnittstelle miteinander verbunden werden (z.B. öffentliche Faxgeräte für Kreditkarten oder Chipkarten). Die Kosten und der Aufwand für eine solche Lösung ist immens, da im Prinzip zwei getrennte Geräte miteinander verbunden werden müssen (siehe Fig. 2). Der Aufwand für die Steuerung der Geräte wird insbesondere dadurch hoch, da das steuernde Gerät immer beobachten muß, in welchem Status sich die Schnittstelle des zu steuernden Gerätes zur Zeit befindet.

Zukünftig sind weitere Anwendungen denkbar, bei welchen der Kommunikationspfad von der Gegenstelle kurzzeitig auf Datenübertragung umgestellt wird, um zum Beispiel transparent Informationen an ein Endgerät oder eine im Endgerät befindliche Chipkarte zu übertragen.

Um über öffentliche analoge Netze Datenkommunikation betreiben zu können, ist der Einsatz von externen oder integrierten Modems erforderlich. Dies bedeutet vor allem für tragbare Geräte das Mitführen von externen oder integrierter Hardware und daduch Stromverbrauch.

In digitalen Netzen (ISDN) findet ebenso die Anschaltung über externe oder integrierte Zusatzkarten statt.

Da die Anschlußphysik beider Netze unterschiedlich ist, bedeutet dies, daß keine einheitliche Anschaltetechnik vorhanden ist.

Erfindungsgemäß wird in dem Kommunikationsendgerät ein digitaler Datenbearbeitungsbaustein vorgesehen, über den sowohl Signalisierungsdaten wie auch Sprach- bzw. Kommunikationsdaten laufen und dort bearbeitet werden. Der Datenbearbeitungsbaustein ermöglicht eine Verbindung der Schnittstellen zu unterschiedlichen Netzen (digitale und/oder analoge) über an den Schnittstellen angeschaltete netzspezifische Anschaltungs-Einrichtungen.

Mit prorammierbaren, digitalen Signalprozessoren (DSP) als Datenbearbeitungsbaustein hat eine neue Technologie zur Verarbeitung von Signalen begonnen. Bisher war es erforderlich, digitale Signale in analoge Signale umzuwandeln, um sie mit vernünfigem technischen und finanziellen Aufwand aufzubereiten, bzw. zu verändern. Dies ist mit den digitalen Signalprozessoren vergleichsweise preiswert möglich.

An Stelle eines digitalen Signalprozessors für allgemeine Anwendungen im Kommunikationsendgerät kann zur Bearbeitung der seriellen Daten auch ein Prozessorbaustein (CPU) vorgesehen sein.

Weiterhin ist es bei Verwendung der digitalen Signalprozessoren sogar sinnvoll, analoge Signale zu digitalisieren, um sie mit den digitalen Signalprozessoren weiterverarbeiten zu können. Digitale Signalprozessoren ermöglichen softwaregesteurt eine Vielzahl von Funktionen, um Signale zu verarbeiten. Nach der Signalveränderung werden die Signale wieder analogisiert und ausgegeben.

Im folgenden wird insbesondere unter Bezugnahme auf Fig 3 ein integrierter Kommunikationspfad unter Verwendung beispielsweise eines digitalen Signalprozessors beschrieben. Dieser integrierte Kommunikationspfad ermöglicht eine vergleichsweise einfache Zusammenschaltung zweier unterschiedlicher Endgeräte.

Die vorgeschlagene Lösung beruht auf einer Integration des Sprach- und Datenpfades im Kommunikationsendgerät. Das Zusammenführen wird beispielsweise durch einen programmierbaren, digitalen Signalprozessor DSP durchgeführt,über den die Schnittstellen zu den Peripherieeinrichtungen, wie Höreranschluß HA, und zu den angeschlossenen Netzen verbunden sind.

Auf einer Hauptbaugruppe HB ist dieser Signalprozessor DSP und für die eingangs erwähnten allgemeinen Steueraufgaben ein Prozessorsystem CPU angeordnet, die miteinander über ein nicht näher dargestelltes Bussystem in Verbindung stehen. Der digitale Signalprozessor DSP ist über eine Wandlereinrichtung WE einerseits mit einer analogen Anpaßschaltung AP und andererseits mit einer externen Analog-Anschaltung AA verbunden. Die Wandlereinrichtung WE wandelt die analogen Signale der Analog-Anschaltung AA und der Anpaßschaltung AP in digitale Signale für den Signalprozessor DSP und umgekehrt um.

Die Analog-Anschaltung AA ist mit einer analogen Schnittstelle a/b-SS zur Anschaltung einer Teilnehmeranschlußleitung verbunden.

Ein Höreranschluß HA ist über die Anpaßschaltung AP und die nachgeschaltete Wandlereinrichtung WE sowohl für die Sprach-wie auch für die Datenübertragung vorgesehen. Die Halbleiterindustrie stellt hier eine Reihe interessanter Bauteile zur Verfügung, die teilweise bereits die benötigten analogen Komponenten, wie Hörer- und Mikrofonverstärker integriert haben.

Die analoge Sprache vom und zum Hörer wird so in beiden Fällen erst einmal digitalisiert und dem Signalprozessor DSP zur Weiterverarbeitung übergeben.

An der Hauptbaugruppe HB sind weiter ein Display DP zur Anzeige sowie eine Tastatur TT angeschaltet.

Zur Anschaltung an ein digitales Netz, beispielsweise ISDN, ist der Signalprozessor DSP mit dem D- und dem B-Kanal dieses Netzes verbunden. Der D-Kanal steht auch mit dem Prozessorsystem CPU in Verbindung. Das Netz ISDN besitzt eine ISDN-Anschaltung IA, die mit einer SO-Schnittstelle SO-SS verbunden ist.

Im digitalen Netz ISDN wandelt dann der Signalprozessor DSP die linear digitalisierte Sprache in eine nach normiertcodierte Form (a-Law, µ-Law) um und sendet sie im B-Kanal der SO-Schnittstelle SO-SS.

Ein analoges Netz ist über die Analog-Anschaltung AA und die Wandlereinrichtung WE mit dem Signalprozessor DSP verbunden. Auch im analogen Netz werden die Daten erst einmal digitalisiert und dann vom Signalprozessor DSP über einen weiteren a/b-Wandler an die a/b-Schnittstelle gesendet.

An Stelle eines drahtgebundenen Netzes ISDN oder a/b kann der Signalprozessor DSP auch mit einem drahtlosen Netz, wie beispielsweise Mobilfunknetz GSM, DECT,DCS 1800 oder auch UMTS verbunden sein. Der Signalprozessor DSP kann auch zur Verbindung eines dieser Netze mit einem optischen Netz oder ganz allgemein zur Verbindung beliebiger analoger und/oder digitaler Kommunikationsnetze vorgesehen sein.

Der Signalprozessor DSP hat nun alle Möglichkeiten in den Sprachpfad einzugreifen, um Sprache und Daten zu übertragen und diese den entsprechenden Anforderungen nach z. B. über digitale Filterfunktionen zu bewerten, die Übertragung von von Störeinflüssen wie Rauschen oder Hintergrundgeräuschen zu befreien oder auftretende Echos auszulöschen.

Der Signalprozessor DSP kann auch im Netz ISDN die Modemfunktion übernehmen. Dadurch ist es nun möglich beim Verbindungsaufbau mit einem beliebigen Kommunikationspartner, beispielsweise einem Hintergrundsystem, sich auch im Netz ISDN wie ein analoges Modem zu verhalten, d.h. der Kommunikationspartner beziehungsweise dessen Datenverarbeitungsanlage unterscheidet erst im Prädialog, um welches Endgerät (annalog oder digital) es sich handelt.

Weiterhin können bei einem angerufenen Endgerät durch entsprechende Bewertung auch im analogen Fall fehlgeleitete Zufallsrufe eindeutig erkannt und somit abgewiesen werden.

Der digitale Signalprozessor DSP kann auch zur Erzeugung von DTMF-Signalen (Dual-Tone-Multi-Frequenzy) für das MFV-Wahlverfahren benutzt werden. Weiter können die DTMF-Signale zu Ansteuerung eines Anrufbeantworters, beispielsweise bei der Fernabfrage, erzeugt werden.

Der Signalprozessor DSP kann auch als DTMF-Emptänger verwendet werden. Er dient dann beispielsweise zur Auswertung von MFV-Signalen, die von einem Akustikkoppler über den Höreranschluß HA eingegeben werden, so daß die Wahl von unerlaubten Rufnummern gesperrt weren kann.

Durch die erfindungsgemäße Ausgestaltung des Kommunikationsendgerätes hat nun ein Kunde oder Benutzer folgende Möglichkeiten.

Ein Kunde schiebt eine Telefonkarte in den Kartenleser (dieser Kartenleser ist in an sich bekannter Weise über eine weitere Schnittstelle mit der Hauptbaugruppe HB verbunden) und hebt den Hörer (angeschaltet an dem Höreranschluß HA) ab. Das Prozessorsystem CPU erkennt diesen Vorgang, lädt den Signalprozessor DSP mit dem Sprachausgabeprogramm und den komprimierten Sprachtexten. Der Signalprozessor DSP dekomprimiert die Sprachtexte und gibt sie an den Hörer aus. Der Kunde bekommt nun Informationen über die Möglichkeiten und den Gebrauch des Telefons bzw. des Telekommunikationsendgerätes.

Der Signalprozessor DSP kann auch zur Sprachauswertung bzw. Spracherkennung eingesetzt werden, um beispielsweise die Spracheingabe zu unterstützen.

Der Kunde möchte telefonieren und gibt die gewünschte Nummer ein. Das Prozessorsystem CPU lädt nun den Signalprozessor DSP mit dem Telefonprogramm und übergibt dem Signalprozessor DSP die Rufnummer. Der Signalprozessor DSP belegt die Leitung (im analogen Netz), prüft den Schleifenstrom und wählt die Nummer im IWV- oder MFV-Wählverfahren und reicht die Sprachdaten vom Hörer zur Leitung und umgekehrt durch.

Bei einer bevorzugten Ausgestaltung der Erfindung ist über das Kommunikationsendgerät, an dem beispielsweise ein Laptop angeschlossen ist, eine Datenkommunikation zu einem Teilnehmer im digitalen oder analogen Netz möglich, ohne daß zusätzlich ein Modem benötigt wird. Hierzu ist der Signalprozessor DSP mit einer weiteren Schnittstelle DFÜ zur Datenfernübertragung verbunden. Dies kann beispielsweise eine V-24-, ein Infrarot- IR, eine drahtlose DECT- oder eine weitere drahtgebundene a/b- Schnittstelle sein. An dieser als standardisierte Endgeräteschnittstelle ausgebildeten Schnittstelle DFÜ kann ein analoges oder ein digitales, vorzugsweise tragbahres Endgerät des Kunden direkt angeschaltet werden.

Der Kunde möchte nun Faxdaten von seinem Laptop während der gleichen Verbindung (oben aufgebauten Sprachverbindung) senden und empfangen. Er drückt hierzu die Datentaste oder gibt den Nummerncode für Faxübertragung ein (wenn keine Datentaste vorgesehen ist). Vorher hat er seinen Laptop zur Datenfernübertragung DFÜ über die ggf. vandalensichere Schnittstelle V-24 an das Endgerät angeschlossen und sein Standard-Faxprogramm (z.B. Winfax) aktiviert.

Das Prozessorsystem CPU erkennt diesen Wunsch und lädt den Signalprozessor DSP mit dem Faxprogramm nach. Der Signalprozessor DSP schaltet den Hörer ab und aktiviert seine Schnittstelle V-24 für externe Datenfernübertragung DFÜ, erkennt am aktiven S1-Signal (Betriebsbereitschaft des Endgeräts) den angeschlossen Laptop und kommuniziert über AT-Kommandos mit ihm. Aus den AT-Kommandos (Hayes Schnittstelle = Industriestandard) erkennt der Signalprozessor DSP den Wunsch für Faxübertagung und sendet deshalb den Faxerkennungston über die analoge a/b-Schnitttstelle a/b-SS.

Das Faxgerät am anderen Ende der Leitung erkennt diesen Ton und sendet nun seinerseits den Antwortton. Beide Seiten handeln nun den Übertragungsmodus aus und übertragen die Daten. Der Signalprozessor DSP verhält sich nun dem Laptop gegenüber wie ein Faxmodem. Der Signalprozessor DSP übermittelt dem Prozessorsystem CPU Informationen über den Betriebszustand, die diese über das Display DP an den Kunden weitergibt. Nach Beendigung der Datenübertragung schaltet der Signalprozessor DSP wieder auf Sprachkommunikation zurück.

Der Kunde möchte nun über Mehrfrequenztöne Abfragen in seinem System (z.B. Telefonbanking) machen. Er drückt dazu die entsprechenden Nummerntasten. Das Prozessorsystem CPU lädt nun den Signalprozessor DSP mit dem DTMF-Tongenerierungsprogramm und übergibt ihm die gewünschten Nummerncodes. Der Signalprozessor DSP erzeugt die entsprechenden DTMF-Töne und gibt sie über die an der Schnittstelle a/b-SS angeschalteten a/b-Leitung aus. Der Kunde beendet die Verbindung. Das Prozessorsystem CPU rechnet die Verbindungsgebühren über den Kartenleser ab, speichert die statistischen Daten und gibt die Karte zurück. Für eine Datenübertragung in Modem-Emulation gilt dieses Beispiel entsprechend.

Das Prozessorsystem CPU möchte nun Verbindung mit dem Server aufnehmen um seine gespeicherten Daten zu übertragen. Es lädt deshalb den Signalprozessor DSP mit dem Modemprogramm (z.B. V.32). Der Signalprozessor DSP baut die Verbindung auf und meldet den erfolgreichen Aufbau dem Prozessorsystem CPU. Das Prozessorsystem CPU führt nun die Authentisierung durch und überträgt die Daten. Danach bauen das Prozessorsystem CPU und der Signalprozessor DSP die Verbindung wieder ab.

Wie dieses Beispiel zeigt, sind durch den Einsatz eines Signalprozessors DSP die Möglichkeiten, auch für zukünftige Erweiterungen bereits Hardwareseitig vorbereitet. Diese Features könnenn dann zeitlich ungebunden über Software-Updates implementiert werden.

## Patentansprüche

1. Telekommunikationsendeinrichtung mit einem Prozessorsystem (CPU) zur Steuerung des Signalisierungs- und Kommunikationsdatenverkehrs, und
mit Schnittstellen zu Peripherieeinrichtungen und zu Kommunikationsnetzen, wobei an den letzteren kommunikationsnetzspezifische Anschlußeinrichtungen (AA, IA) angeschaltet sind, bei dem ein digitaler Datenbearbeitungsbaustein (DSP) und eine Analog-Digital- bzw. Digital-Analog-Wandlereinrichtung (WE) zur Verbindung der analogen und der digitalen Schnittstellen vorgesehen sind, und
bei dem der Datenbearbeitungsbaustein (DSP) zur Signalverarbeitung der Signalisierungs- und Kommunikationsdaten mit dem Prozessorsystem (CPU) in Verbindung steht.

2. Telekommunikationsendeinrichtung nach Anspruch 1,
bei dem der Datenbearbeitungsbaustein (DSP) durch einen digitalen Signalprozessor realisiert ist.

3. Telekommunikationsendeinrichtung nach Anspruch 1 oder 2,
bei dem eine standardisierte Endgeräteschnittstelle (DFÜ) an dem Datenbearbeitungsbaustein (DSP) angeschaltet ist.
